# FASCICULE DE BREVET EUROPEEN

(11) **EP 1 108 792 B1**
(45) Date de publication et mention de la délivrance du brevet: **14.04.2004**
(21) Numéro de dépôt: 00403414.6
(22) Date de dépôt: 06.12.2000
(51) Int. Cl.: C13K 1/10

(54) **Dextrose hydrate pulvérulent et son procédé de préparation**
Pulverförmiges Dextrosehydrat und Verfahren zur Herstellung desselben
Powdered dextrose hydrate and method for preparing same

(30) Priorité: 17.12.1999 FR 9915951
(43) Date de publication de la demande: 20.06.2001
(73) Titulaire: Roquette Frères, 62136 Lestrem (FR)
(72) Inventeur: Labergerie, Erik, 62136 Lestrem (FR); Lefevre, Philippe, 594000 Merville (FR); Lis, José, 59253 La Gorgue (FR)
(74) Mandataire: Boulinguiez, Didier

(56) Documents cités:
- EP-A- 0 192 460
- WO-A-94/28181
- FR-A- 1 331 252
- FR-A- 2 398 802
- FR-A- 2 787 811
- GB-A- 1 112 553
- ARMSTRONG ET AL.: "The compressional properties of dextrose monohydrate and anhydrous dextrose of varying water contents" DRUG DEVELOPMENT AND INDUSTRIAL PHARMACY, vol. 12, no. 11-13, pages 1885-1901, XP000946602

## Description

La présente invention a pour objet un dextrose pulvérulent de richesse élevée en dextrose et de forme cristalline essentiellement α, présentant une teneur en eau particulière et dont les propriétés techniques d'utilisation, notamment en compression directe, sont améliorées.

La présente invention concerne encore un dextrose hydraté pulvérulent de densité et de granulométrie remarquables et présentant également une bonne aptitude à l'écoulement, ainsi qu'un procédé pour sa préparation.

Au sens de l'invention, on entend par « dextrose hydraté pulvérulent », un dextrose pulvérulent présentant une teneur en eau supérieure à 1%, de préférence comprise entre 2% et 10 % et plus préférentiellement encore comprise entre 5 et 9,5 %.

Le dextrose, produit industriellement par hydrolyse de divers amidons, est d'usage courant, principalement en industrie alimentaire, depuis de nombreuses années.

Il est avantageusement utilisé dans les applications où il y a nécessité de disposer de produits en poudre, par exemple pour la fabrication de tablettes ou de comprimés, de chocolats, de produits de viennoiserie et de pâtisserie, de compositions nutritives pour les plantes ou de divers mélanges pulvérulents où il joue habituellement le rôle d'agent édulcorant osmotique, d'agent nutritif et/ou d'excipient.

Trois formes cristallines du dextrose sont classiquement décrites, i.e. le dextrose α monohydrate, le dextrose α anhydre et le dextrose β anhydre.

Bien que de nombreux procédés aient été proposés pour transformer directement des solutions de glucose en matières solides de toutes formes cristallines, le dextrose α monohydrate reste la source quasi exclusive de dextrose poudre.

Ce dextrose α monohydrate est classiquement produit par cristallisation lente, par refroidissement de sirops sursaturés et à forte teneur en glucose provenant de l'hydrolyse de l'amidon.

Cependant, tout dextrose pulvérulent constitué de cette seule espèce cristalline et préparé classiquement, est généralement peu compressible, et il est nécessaire de lui additionner des maltodextrines ou des polysaccharides pour la fabrication de tablettes ou de comprimés. Malgré cela, les produits ainsi préparés n'ont généralement pas donné satisfaction de par les problèmes d'agglomération et de manutention générés par les maltodextrines ou polysaccharides.

Le choix du dextrose s'est alors porté sur le dextrose cristallin α anhydre, dextrose cristallin très pur ayant une faible teneur en eau, i.e. au plus égale à 1 %.

Ce dextrose α anhydre est généralement produit par cristallisation du glucose à des températures de 60 à 65°C, par exemple par évapocristallisation dans des autoclaves à vide poussé, et dans des conditions opératoires soigneusement réglées.

Cependant, le dextrose α anhydre ainsi obtenu présente les inconvénients de se dissoudre relativement lentement dans l'eau et de présenter une tendance à la prise en masse au cours de sa dissolution. En effet, une partie du dextrose α anhydre se transforme, lors de cette dissolution, à nouveau en dextrose α monohydrate, qui s'agglomère et retarde d'autant la dissolution du dextrose α anhydre.

Il est donc nécessaire, pour dissoudre convenablement les deux formes α monohydrate et α anhydre, d'employer de l'eau à haute température ou d'ajouter progressivement le dextrose à l'eau sous agitation.

Il a donc été ensuite proposé d'utiliser un dextrose cristallin β anhydre qui présente une bien meilleure vitesse de dissolution, en comparaison à celle du dextrose α anhydre, voire même monohydrate.

Cependant, il est connu des spécialistes de la cristallisation du dextrose que si le point de transition de la cristallisation du dextrose α monohydrate en dextrose α anhydre est d'environ 55 °C, celui du dextrose α anhydre en dextrose β anhydre est d'environ 110 °C.

Il s'en suit que pour obtenir le dextrose β anhydre, il faut travailler à une température très élevée, température à laquelle le dextrose n'est pas très stable. Ce résultat limite d'autant plus l'exploitation industrielle d'un tel procédé de cristallisation.

La demande WO 94/28181 décrit un dextrose hydraté contenant plus de 99,5% de dextrose dont 100% de dextrose α avec une teneur en eau de 8-9 %. Cependant, ce dextrose est obtenu par un procédé de "spray drying".

La demande de brevet FR 2.398.802 décrit un dextrose pulvérulent qui possède une bonne aptitude à l'écoulement, qui ne s'agglomère pas, qui est sensiblement exempt de goût désagréable et d'impuretés colorées, mais possède également des propriétés satisfaisantes en compression. Les auteurs de ce brevet indiquent cependant que ce dextrose pulvérulent est en fait constitué du mélange en quantités à peu près équivalentes de dextrose α et β anhydres. Son procédé d'obtention par cristallisation et granulation est en outre particulièrement long et fastidieux.

De tout ce qui précède, il ressort qu'il existe un besoin non satisfait de disposer d'un dextrose hydraté pulvérulent de richesse élevée en glucose et de haute pureté cristalline et qui présente par ailleurs une excellente compressibilité et une très bonne aptitude à l'écoulement.

La société Demanderesse a donc eu le mérite d'élaborer, au prix de nombreuses recherches, un nouveau dextrose hydraté pulvérulent.

Le dextrose hydraté pulvérulent conforme à l'invention est ainsi tout d'abord caractérisé en ce qu'il présente :
- une richesse en dextrose au moins égale à 98 %,
- une teneur en forme cristalline α au moins égale à 95 %,
- une teneur en eau supérieure à 1 %, de préférence comprise entre 2 % et 10 % et plus préférentiellement encore comprise entre 5 et 9,5 %,
- une compressibilité, déterminée selon un test A, au moins égale à 70 N, de préférence au moins égale à 90 N, et encore plus préférentiellement comprise entre 90 et 200 N.

La richesse en dextrose peut être mesurée par une méthode classique de chromatographie en phase liquide à haute performance. Elle est ici déterminée à une valeur au moins égale à 98 %.

La cristallinité est une mesure de la structure cristalline ou non du produit. Cette cristallinité est déterminée par la mesure de la chaleur de fusion effectuée au moyen d'un calorimètre d'analyse différentielle. On détermine la cristallinité du produit en comparant sa chaleur de fusion avec celle de témoins cristallins contenant des proportions variables de dextrose α et β.

La teneur en forme cristalline α du dextrose pulvérulent conforme à l'invention représente au moins 95 % en poids des formes cristallines totales dudit dextrose pulvérulent.

On mesure également l'humidité des particules par des méthodes classiques connues par ailleurs de l'homme du métier, par exemple par la technique KARL-FISCHER. La teneur en eau dudit dextrose hydraté pulvérulent est ainsi supérieure à 1 %, et plus particulièrement comprise entre 2 et 10 %. Comme il sera exemplifié ci-après, les dextrose hydratés pulvérulents ayant une teneur en eau comprise entre 5 et 9,5 % et plus particulièrement comprise entre 7 et 8 % présentent les meilleures propriétés en compression.

La compressibilité du dextrose hydraté pulvérulent conforme à l'invention est déterminée par la mise en oeuvre des deux tests A et B suivants.

Le test A, décrit dans le brevet EP 220.103 dont la société Demanderesse est titulaire, consiste à mesurer la force, exprimée en Newton, qui est représentative de la compressibilité du dextrose hydraté pulvérulent étudié. Cette force traduit ici la résistance à l'écrasement d'un comprimé qui est cylindrique à faces convexes (rayon de courbure de 13 mm), d'un diamètre de 13 mm, d'une épaisseur de 6 mm et d'un poids de 0,734 g, soit d'une masse volumique apparente de 1,3 g/ml.

Le test B, qui permet de définir les dextrose hydratés pulvérulents présentant les meilleures propriétés en compression, consiste à mesurer, sur un Duromètre ERWEKA TBH 30, la résistance à l'écrasement d'un comprimé cylindrique à faces convexes (rayon de courbure de 13 mm), d'un diamètre de 13 mm pour une épaisseur de 6 mm et un poids de 0,762 g, soit d'une masse volumique apparente de 1,35 g/ml.

Les dextrose hydratés pulvérulents conformes à l'invention présentent ainsi une valeur de compressibilité, selon le test A, au moins égale à 70 N et notamment comprise entre 90 et 200 N. Par ailleurs, certains d'entre eux, plus compressibles, qui possèdent une valeur de compressibilité selon le test A comprise entre 150 et 200 N, présentent en outre une valeur de compressibilité selon le test B au moins égale à 170 N, et avantageusement comprise entre 175 et 300 N.

Il est surprenant qu'un dextrose hydraté pulvérulent puisse présenter conjointement une telle richesse élevée en dextrose, i.e. au moins égale à 98 %, dont la forme cristalline α monohydrate représente au moins 95 % et une compressibilité élevée sans qu'il ne soit nécessaire d'introduire d'adjuvants particuliers, cette compressibilité s'exprimant par des valeurs, selon ledit test A, au moins égales à 70 N, de préférence au moins égales à 90 N et plus préférentiellement encore comprises entre 90 et 200 N.

Et il est particulièrement remarquable qu'un tel dextrose hydraté pulvérulent puisse en outre présenter, selon ledit test A, une compressibilité comprise entre 150 et 200 N, et également, selon le test B, une compressibilité au moins égale à 170 N, de préférence comprise entre 175 et 300 N.

A la connaissance de la société Demanderesse, il n'existe pas de dextrose pulvérulent hydraté dans l'état de la technique qui possède de telles propriétés de compression et une telle pureté cristalline en dextrose.

En effet, il est admis très classiquement que la préparation d'un dextrose pulvérulent ayant des propriétés de compression élevées nécessite de mélanger du dextrose α monohydrate avec des adjuvants tels que le maltose et des maltodextrines, ou de fabriquer des compositions mixtes de formes α et β anhydres du dextrose, par exemple par atomisation d'un sirop de glucose à haute matière sèche.

De ce fait, et contrairement à ce que l'on attendait, les dextrose hydratés pulvérulents conformes à l'invention présentent une compressibilité remarquablement élevée pour une pureté cristalline jamais atteinte par les dextrose monohydrates pulvérulents de l'art antérieur.

A titre d'exemple, les dextrose monohydrates pulvérulents commercialisés sous les marques EMDEX® UNIDEX®, ROYAL T® et CANTAB® dans le domaine de la compression directe et qui sont obtenus généralement par atomisation d'un sirop de glucose d'un dextrose équivalent (D.E.) de 93 à 99 %, comme il est spécifié dans l'annexe 3 de la monographie « Dextrates » du Handbook of Pharmaceutical Excipients, présentent, selon le test A, des valeurs de compression au plus égales à 150 N et selon le test B, des valeurs de compression inférieures à 170 N.

Une analyse fine de leur composition révèle cependant qu'ils renferment globalement entre 5 et 6 % en poids de maltose, maltotriose et oligosaccharides de D.P. supérieurs.

Le dextrose hydraté pulvérulent conforme à l'invention peut être encore caractérisé par sa densité apparente et par son diamètre moyen.

La détermination de la densité apparente est réalisée par l'utilisation d'un appareil commercialisé par la société HOSOKAWA sous la marque POWDER TESTER en appliquant la méthode recommandée pour mesurer une densité apparente.

Dans ces conditions, le dextrose hydraté pulvérulent conforme à l'invention présente une densité apparente relativement faible, généralement inférieure à 0,7 g/ml, de préférence comprise entre 0,45 et 0,65 g/ml, et plus préférentiellement encore comprise entre 0,5 et 0,6 g/ml.

Le dextrose hydraté pulvérulent conforme à l'invention présente généralement un diamètre moyen compris entre 50 et 1000 µm, de préférence compris entre 100 et 500 µm. Ces valeurs sont déterminées sur un granulomètre LASER LS de marque COULTER®, par la détermination de la répartition volumique en taille des particules de dextrose hydraté pulvérulent.

Par ailleurs, on peut également caractériser le dextrose hydraté pulvérulent conforme à l'invention par son aptitude à l'écoulement, cette propriété convenant particulièrement aux applications en compression, et à celles de la préparation de mélanges pulvérulents nutritifs.

L'aptitude à l'écoulement dudit dextrose est évaluée en utilisant l'appareil POWDER TESTER commercialisé par la société HOSOKAWA. Cet appareil permet de mesurer, dans des conditions standardisées et reproductibles, l'aptitude à l'écoulement d'une poudre et de calculer une note d'écoulement, encore appelée indice de Carr. Le dextrose hydraté pulvérulent conforme à l'invention présente une note d'écoulement excellente, généralement d'au moins 60, de préférence comprise entre 60 et 90. Cette valeur est généralement supérieure à celle des poudres de dextrose monohydrate cristallin de l'art antérieur et est équivalente aux dextrose poudres de type dextrates.

La compressibilité élevée dudit dextrose hydraté pulvérulent et son aptitude à l'écoulement permettent alors la production, par simple compression directe, de comprimés de dureté élevée (de type comprimés à sucer) ou de comprimés de dureté moyenne (de type comprimés à croquer).

Sans vouloir être lié par une quelconque théorie, on peut penser que les caractéristiques physico-chimiques précédemment citées du glucose hydraté pulvérulent conforme à l'invention expliquent son excellente aptitude à l'écoulement. Ces caractéristiques concernent en particulier sa richesse en dextrose, sa pureté cristalline et sa granulométrie centrée.

Le dextrose hydraté pulvérulent conforme à l'invention est susceptible d'être obtenu en procédant à une succession d'étapes consistant en une étape de réhumidification/granulation, à l'aide d'un liant approprié d'un dextrose cristallin de forme essentiellement α, obtenu directement par cristallisation ou par séchage partiel ou total d'un dextrose cristallin mono hydrate, puis en une étape de maturation/séchage du dextrose granulé réhumidifié ainsi obtenu.

Le liant peut être constitué uniquement d'eau en quantité telle qu'elle permet de contrôler le caractère hydraté du produit final obtenu, ou d'un sirop de glucose d'une teneur variable en matière sèche, de préférence comprise entre 40 et 80 %. La fraction de matière sèche apportée par le liant est choisie de manière à maintenir le taux de forme cristalline β du produit final à une valeur au plus égale à 5 % et la pureté en glucose au moins égale à 98 %.

Dans un premier mode préférentiel de réalisation du procédé conforme à l'invention, on utilise un dextrose de forme cristalline essentiellement α dont la teneur en eau est au plus égale à 1 %. La granulation par voie humide sera réalisée avec de 2 à 20 % d'eau amenés par le liant.

Dans un deuxième mode préférentiel de réalisation du procédé conforme à l'invention, on utilise un dextrose de forme cristalline essentiellement α, dont la teneur en eau est comprise entre 1 et 8 %. La granulation par voie humide sera ici réalisée avec de 1 à 12 % d'eau amenés par le liant.

Dans un troisième mode préférentiel de réalisation du procédé conforme à l'invention, on utilise un dextrose de forme cristalline essentiellement α, dont la teneur en eau est comprise entre 8 et 10 %. La granulation par voie humide sera ici réalisée avec 1 à 8 % d'eau amenée par le liant.

L'étape de maturation/séchage sera conduite dans ces trois modes préférentiels de réalisation de manière à obtenir un dextrose pulvérulent conforme à l'invention présentant une teneur en eau finale au moins égale à 1 %, de préférence comprise entre 2 et 10 %, et plus préférentiellement encore comprise entre 5 et 9,5 %.

Par « forme cristalline essentiellement α », on entend un dextrose poudre dont la forme cristalline α représente au moins 95 % en poids des formes cristallines sous laquelle le dextrose peut se présenter.

Il est à préciser que, comme l'a constaté la société Demanderesse, le produit conforme à l'invention ne peut pas être préparé par simple atomisation, cristallisation ou granulation à partir d'une solution de glucose, car dans ce cas les propriétés remarquables de compressibilité ne peuvent être en fait obtenues que par addition d'adjuvants, comme il a été précisé plus haut.

C'est ainsi que les essais en enceintes climatiques d'obtention de dextroses monohydrates compressibles, renfermant des contenus variables en eau, réalisés par ailleurs par ARMSTRONG et al (in Drug development and industrial pharmacy, 1986, 12, pp 1885-1901) n'ont pas permis à leur auteur d'obtenir des dextroses ayant de telles propriétés de compression.

Dans le procédé selon l'invention, on choisit comme produit de départ de préférence un dextrose cristallin α renfermant une teneur en eau supérieure à 1 %, de préférence comprise entre 2 et 10 %, pour obtenir un dextrose hydraté conforme à l'invention présentant, selon le test A, une compressibilité au moins égale à 70 N et avantageusement comprise entre 90 et 200 N.

On choisit plus préférentiellement un dextrose cristallin α renferment une teneur en eau au plus égale à 1 % pour obtenir un dextrose hydraté pulvérulent conforme à l'invention présentant, selon le test A, une compressibilité comprise entre 150 et 200 N, et selon le test B, une compressibilité au moins égale à 170 N et notamment comprise entre 175 et 300 N.

De manière surprenante et inattendue, la société Demanderesse a constaté que la granulation d'un dextrose poudre par voie humide à l'aide d'un liant permet de préparer avec un haut rendement un produit conforme à l'invention sur le plan de sa compressibilité, mais également sur le plan de son aptitude à l'écoulement, de sa densité et de sa granulométrie.

En effet, les procédés décrits antérieurement ne permettent pas d'obtenir l'ensemble des caractéristiques souhaitées.

Pour procéder à la granulation, on peut employer par exemple un mélangeur-granulateur en mode discontinu, semi continu ou encore continu comme le FLEXOMIX vertical commercialisé par la société SCHUGI, une drageuse se type DRIAM ou DUMOULIN, ou le CB horizontal commercialisé par la société LÖDIGE dans lequel on introduit, via un doseur pondéral, le dextrose poudre de départ à granuler en continu et le liant via un doseur volumétrique.

De manière préférentielle, on choisit d'utiliser un mélangeur-granulateur continu de type FLEXOMIX vertical SCHUGI. La poudre de dextrose de départ et le liant sont très intimement mélangés dans le mélangeur-granulateur équipé d'un axe avec couteaux disposés en pales, et d'un système de pulvérisation de liquides par buses d'injection.

Selon un mode préférentiel du procédé conforme à l'invention, la bonne dispersion des constituants et l'agglomération des particules de la poudre de dextrose de départ sont réalisées par agitation à grande vitesse, i.e. d'une valeur au moins égale à 1000 tpm, de préférence au moins égale à 3500 tpm. A la sortie du mélangeur-granulateur, les granulés formés sont déchargés en continu sur un séchoir - maturateur.

Le déchargement se fait préférentiellement par gravité dans le cas dudit granulateur vertical, et par poussée, via l'axe des couteaux rotatifs, si le granulateur horizontal est utilisé.

Cette deuxième étape de séchage - maturation en sortie du mélangeur-granulateur permet d'éliminer si besoin tout ou partie de l'eau provenant du liant, de manière à ce que la cristallisation et la stabilisation se produisent après l'étape préalable de granulation, tout en maintenant la teneur en eau du produit final à une valeur supérieure à 1 %, notamment comprise entre 2 et 10 %.

Le séchoir - maturateur peut être par exemple un séchoir - maturateur à lit fluidisé ou un tambour maturateur rotatif. Le dextrose hydraté pulvérulent conforme à l'invention est obtenu après refroidissement et éventuellement tamisage.

Dans ce cas, les fines particules peuvent être directement recyclées en tête de granulation, et les grosses particules être broyées et recyclées en tête de tamisage.

Le dextrose hydraté pulvérulent conforme à l'invention peut être avantageusement employé, en raison de ses propriétés fonctionnelles mentionnées plus haut, comme agent édulcorant, osmotique, nutritif ou excipient dans des compositions utilisées dans tout type d'industrie, notamment dans les domaines alimentaire, pharmaceutique, chimique et agrochimique.

En outre, certaines propriétés avantageuses dudit dextrose hydraté pulvérulent favorisent son utilisation dans la préparation de comprimés à sucer, à mâcher, à dissoudre ou à avaler, en particulier destinés aux domaines précités.

Les exemples qui suivent permettent d'illustrer l'invention sans pour autant la limiter à ces seuls exemples.

### EXEMPLE 1

On alimente un mélangeur-granulateur FLEXOMIX vertical SCHUGI en continu via un doseur poudre, à un débit de 500 à 600 kg/h, avec un dextrose cristallin monohydrate, fabriqué par cristallisation, renfermant 8,4 % d'eau.

D'autre part, on alimente le mélangeur-granulateur en continu avec le liant à 25°C et à un débit de 25 à 35 l/h, via une buse de pulvérisation. L'axe rotatif à couteaux est préalablement réglé à la vitesse de 3500 tpm.

La poudre granulée humide en sortie du mélangeur-granulateur tombe en continu, par gravité, dans un séchoir - maturateur à lit fluidisé SCHUGI à quatre compartiments. Dans les trois premiers compartiments, le produit granulé est séché par de l'air à 70°C, puis il est refroidi par de l'air à 25°C dans le dernier compartiment. Le produit granulé, séché et refroidi est ensuite tamisé en continu sur un tamis rotatif équipé d'une toile métallique de 740 µm.

Le dextrose cristallin monohydrate de départ A et les dextrose hydratés pulvérulents B, C et D conformes à l'invention, préparés respectivement avec de l'eau, une solution de glucose à 30 % de matière sèche et une solution de glucose à 60 % de matière sèche comme liant, présentent les caractéristiques rassemblées dans le tableau I suivant.

**Tableau I**

| Paramètres | A | B | C | D |
|---|---|---|---|---|
| Richesse en dextrose (% en poids) | > 99 | > 99 | > 99 | > 99 |
| Teneur en forme cristalline α (%) | > 98 | > 98 | > 98 | > 98 |
| Teneur en eau (%) | 8,4 | 8,5 | 6,7 | 6,3 |
| Densité apparente (g/ml) | 0,52 | 0,57 | 0,49 | 0,49 |
| Diamètre moyen (µm) | 92 | 176 | 171 | 198 |
| Note d'écoulement (valeur/100) | 41 | 73 | 72 | 73 |
| Compressibilité (N) - test A | 50 | 77 | 103 | 103 |
| Compressibilité (N) - test B | 60 | 110 | 143 | 147 |

### EXEMPLE 2

On alimente un mélangeur-granulateur FLEXOMIX vertical SCHUGI en continu via un doseur poudre, à un débit de 500 kg/h, avec un dextrose cristallin dont la teneur en eau est de 5 %.

D'autre part, on alimente le mélangeur-granulateur en continu avec de l'eau à 25°C et à un débit de 35 l/h, via une buse de pulvérisation.

L'axe rotatif à couteaux est préalablement réglé à la vitesse de 3500 tpm.

La poudre granulée humide en sortie du mélangeur-granulateur tombe en continu, par gravité, dans un séchoir - maturateur à lit fluidisé SCHUGI à quatre compartiments dans lequel le produit granulé est stabilisé par de l'air à 30°C.

Le produit granulé ainsi stabilisé est ensuite tamisé en continu sur un tamis rotatif équipé d'une toile métallique de 740 µm.

Le dextrose cristallin de départ renfermant 5 % d'eau E et le dextrose hydraté pulvérulent F conforme à l'invention présentent les caractéristiques rassemblées dans le tableau II suivant.

**Tableau II**

| Paramètres | E | F |
|---|---|---|
| Richesse en dextrose (% en poids) | > 99 | > 99 |
| Teneur en forme cristalline α (%) | > 98 | > 98 |
| Teneur en eau (%) | 5 | 7,6 |
| Densité apparente (g/ml) | 0,60 | 0,56 |
| Diamètre moyen (µm) | 241 | 300 |
| Note d'écoulement (valeur/100) | 53 | 73 |
| Compressibilité (N) - test A | < 50 | 83 |
| Compressibilité (N) - test B | < 50 | 111 |

### Exemple 3

On alimente un mélangeur-granulateur FLEXOMIX vertical SCHUGI en continu via un doseur poudre, à un débit de 800 kg/h, avec un dextrose cristallin dont la teneur en eau est de 0,5 %.

D'autre part, on alimente le mélangeur-granulateur en continu avec de l'eau à 25°C et à un débit de 80 l/h, via une buse de pulvérisation. L'axe rotatif à couteaux est préalablement réglé à la vitesse de 3500 tpm.

La poudre granulée humide en sortie du mélangeur-granulateur tombe en continu, par gravité, dans un séchoir - maturateur à lit fluidisé SCHUGI à quatre compartiments dans lequel le produit granulé est stabilisé par de l'air à 30°C.

Le produit ainsi stabilisé est ensuite tamisé en continu sur un tamis rotatif équipé d'une toile métallique de 740 µm.

Le dextrose cristallin de départ G et le dextrose hydraté pulvérulent H conforme à l'invention présentent les caractéristiques rassemblées dans le tableau III suivant.

**Tableau III**

| Paramètres | G | H |
|---|---|---|
| Richesse en dextrose (% en poids) | > 99 | > 99 |
| Teneur en forme cristalline α (%) | > 98 | > 98 |
| Teneur en eau (%) | 0,5 | 7,6 |
| Densité apparente (g/ml) | 0,53 | 0,59 |
| Diamètre moyen (µm) | 224 | 434 |
| Note d'écoulement (valeur/100) | 43 | 81 |
| Compressibilité (N) - test A | 45 | 195 |
| Compressibilité (N) - test B | 50 | 260 |

### Exemple 4

D'autres produits pulvérulents conformes à l'invention sont préparés en appliquant le procédé décrit dans les exemples 1,2 et 3, mais en modifiant les conditions de mise en oeuvre de manière à obtenir une gamme d'échantillons ayant un degré d'hydratation et une compressibilité variables.

Les produits obtenus présentent les caractéristiques énoncées dans le tableau IV ci-dessous, et sont comparés à des dextrose pulvérulents connus par ailleurs.

**Tableau IV**

| Paramètres | Produits conformes à l'invention | CERELOSE | CANTAB® |
|---|---|---|---|
| Richesse en dextrose (% en poids) | > 99 | 99,1 | 94,7 |
| Teneur en maltose (%) | < 1 | 0,7 | 3,7 |
| Teneur en maltotriose (%) | < 0,5 | 0,1 | 0,6 |
| Teneur en forme cristalline α (%) | > 95 | > 99,8 | Nd* |
| Teneur en eau (%) | 2,3 - 8,7 | 9,1 | 9,2 |
| Densité apparente (g/ml) | 0,49 - 0,59 | 0,58 | 0,61 |
| Diamètre moyen (µm) | 99 - 474 | 350 | 260 |
| Note d'écoulement (valeur/100) | 60 - 90 | 75 | 70 |
| Compressibilité (N) test A | 70 - 200 | 60 | 131 |
| Compressibilité (N) test B | 175 - 300 | 143 | 163 |

| | | | |
|---|---|---|---|
| *Nd : Non déterminé | | | |

Les dextrose hydratés pulvérulents conformes à l'invention possèdent tous, comparativement aux produits de l'art antérieur, d'excellentes propriétés fonctionnelles, d'aptitude à l'écoulement et surtout de compressibilité et ceci malgré de hautes richesse en dextrose et pureté cristalline en forme α.

Ces nouveaux produits, notamment ceux présentant une compressibilité supérieure à 200 N, sont particulièrement aptes à être utilisés sans inconvénient dans les industries alimentaire, pharmaceutique, chimique et agrochimique, en particulier comme agents de compression. A la connaissance de la société Demanderesse, il n'existe pas de dextrose pulvérulent qui présente une valeur de compressibilité, selon le test A, comprise entre 180 et 200 N, et selon le test B, supérieure à 220 N, et avantageusement supérieure à 230 N.

### Exemple 5

La fabrication de comprimés à sucer destinés à la préparation de confiserie est réalisée à partir de dextroses hydratés pulvérulents conformes ou non à l'invention.

La composition de ces comprimés est donné par le tableau V suivant.

**Tableau V**

| Composition | Répartition en poids (%) |
|---|---|
| Dextrose | 97,5 |
| Acide citrique | 1,5 |
| Arôme citron (poudre) | 0,5 |
| Stéarate de magnésium | 0,5 |

Le mélange des différents constituants est effectué pendant 5 min dans un mélangeur TURBULA commercialisé par la société WILLY A BACHOFEN MACHINENFABRIK et les comprimés sont fabriqués sur une presse alternative FROGERAIS équipée de poinçons concaves de 13 mm.

Le tableau VI suivant rassemble les résultats obtenus avec un dextrose cristallin témoin de l'art antérieur et les trois dextrose hydratés C, F et H préparés suivant les exemples 1, 2 et 3 précédents.

**Tableau VI**

| Dextrose | Dextrose cristallin | Dextrose C | Dextrose F | Dextrose H |
|---|---|---|---|---|
| Poids des comprimés (mg) | 733 | 735 | 734 | 736 |
| Epaisseur des comprimés (mm) | 6 | 6 | 6 | 6 |
| Densité des comprimés (g/ml) | 1,3 | 1,3 | 1,3 | 1,3 |
| Rapport de Dureté* | 1 | 1,5 | 1,6 | 4 |

| | | | | |
|---|---|---|---|---|
| * : on entend par « rapport de dureté » le rapport des duretés SCHLEUNIGER des comprimés préparés à partir des dextrose conformes à l'invention versus la dureté des comprimés préparés avec le dextrose cristallin témoin. | | | | |

Tous les mélanges effectués avec les dextroses hydratés conformes à l'invention donnent des résultats bien supérieurs à ceux obtenus avec un dextrose cristallin classique (de 1,5 à 4 fois la dureté du témoin). Il est confirmé que la meilleure comprimabilité est encore celle du produit H, qui a été préparé à partir d'un dextrose cristallin ayant une teneur en eau de 0,5 %.

## Revendications

1. Dextrose hydraté pulvérulent **caractérisé en ce qu'**il présente :
- une richesse en dextrose au moins égale à 98 %,
- une teneur en forme cristalline α au moins égale à 95 %,
- une teneur en eau supérieure à 1 %, de préférence comprise entre 2% et 10 % et plus préférentiellement encore comprise entre 5 et 9,5 %,
- une compressibilité, déterminée selon un test A consistant à mesurer la force, exprimée en Newton, qui est représentative de la compressibilité du dextrose pulverulent, cette force traduisant la résistance à l'écrasement d'un comprimé qui est cylindrique à faces convexes (rayon de courbure de 13 mm), d'un diamètre de 13 mm, d'une épaisseur de 6 mm et d'un poids de 0,734 g, soit d'une masse volumique apparente de 1,3 g/ml, ladite compressibilité étant au moins égale à 70 N, de préférence au moins égale à 90 N et plus préférentiellement comprise entre 90 et 200 N.

2. Dextrose hydraté pulvérulent selon la revendication 1 **caractérisé en ce qu'**il présente une compressibilité, déterminée selon le test A de la revendication 1, comprise entre 150 et 200 N et selon un test B consistant à mesurer, sur un Duromètre ERWEKA TBH 30 la résistance à l'écrasement d'un comprimé cylindrique à faces convexes (rayon de courbure de 13 mm), d'un diamète de 13 mm pour une épaisseur de 6 mm et un poids de 0,762 g, soit d'une masse volumique apparente de 1,35 g/ml, au moins égale à 170 N, de préférence comprise entre 175 et 300 N.

3. Dextrose hydraté pulvérulent selon l'une ou l'autre des revendications 1 et 2, **caractérisé en ce qu'**il présente :
- une densité apparente, déterminée selon HOSOKAWA POWDER TESTER, inférieure à 0, 7 g/ml, de préférence comprise entre 0,45 et 0,65 g/ml et plus préférentiellement encore comprise entre 0,5 et 0,6 g/ml,
- un diamètre moyen compris entre 50 et 1000 µm, de préférence compris entre 100 et 500 µm,
- une note d'écoulement au moins égale à 60, de préférence comprise entre 60 et 90.

4. Procédé de préparation d'un dextrose hydraté pulvérulent selon l'une quelconque des revendications 1 à 3, **caractérisé par le fait qu'**il comprend une succession d'étapes consistant en une étape de réhumidification / granulation, à l'aide d'un liant approprié, d'un dextrose cristallin de forme essentiellement α, obtenu directement par cristallisation ou par séchage partiel ou total d'un dextrose cristallin mono hydrate, puis en une étape de maturation / séchage du dextrose granulé réhumidifié ainsi obtenu, tout en maintenant la teneur en eau du produit final à une valeur supérieure à 1%, notamment comprise entre 2% et 10%.

5. Procédé de préparation d'un dextrose hydraté pulvérulent selon l'une ou l'autre des revendications 1 et 3, **caractérisé par le fait qu'**il comprend une étape de granulation d'un dextrose cristallin α présentant une teneur en eau supérieure à 1 %, de préférence comprise entre 2 et 10 %.

6. Procédé de préparation d'un dextrose hydraté pulvérulent selon l'une ou l'autre des revendications 2 ou 3, **caractérisé par le fait qu'**il comprend une étape de granulation d'un dextrose cristallin α présentant une teneur en eau au plus égale à 1 %.

7. Procédé de préparation selon l'une quelconque des revendications 4 à 6, **caractérisé en ce que** l'étape de granulation est réalisée dans un mélangeur-granulateur continu.

8. Dextrose hydraté pulvérulent selon la revendication 2 **caractérisé par le fait qu'**il présente :
- une richesse en dextrose au moins égale à 98 %,
- une teneur en forme cristalline α au moins égale à 95 %,
- une compressibilité, déterminée selon le test A, comprise entre 180 et 200 N, et selon le test B, supérieure à 220 N, et préférentiellement supérieure à 230 N.

9. Utilisation d'un dextrose hydraté pulvérulent selon l'une quelconques des revendications 1 à 3 ou 8, ou obtenu selon l'une quelconque des revendications 4 à 7 en tent qu'agent édulcorant, osmotique, nutritif ou excipient dans des compositions destinées, en particulier, aux domaines alimentaire, pharmaceutique, chimique ou agrochimique.

## Patentansprüche

1. Pulverförmiges Dextrosehydrat, **dadurch gekennzeichnet, dass** es folgende Daten aufweist:
- einen Gehalt an Dextrose von mindestens gleich 98 %,
- einen Anteil an α-kristalliner Form von mindestens gleich 95 %,
- einen Wasseranteil über 1 %, bevorzugt zwischen 2 % und 10 % und noch bevorzugter zwischen 5 und 9,5 %,
- eine gemäß einem Test A bestimmte Komprimierbarkeit von mindestens gleich 70 N, bevorzugt mindestens gleich 90 N und noch bevorzugter zwischen 90 und 200 N, wobei der Test A darin besteht, dass man die in Newton ausgedrückte Kraft misst, die ein Ausdruck für die Komprimierbarkeit der pulverförmigen Dextrose ist, wobei diese Kraft die Druckfestigkeit einer zylinderförmigen Tablette mit konvexen Seiten (Krümmungsradius 13 mm), mit einem Durchmesser von 13 mm, einer Dicke von 6 mm und einem Gewicht von 0,734 g, d.h. einer scheinbaren Volumenmasse von 1,3 g/ml darstellt.

2. Pulverförmiges Dextrosehydrat nach Anspruch 1, **dadurch gekennzeichnet, dass** es eine gemäß dem Test A nach Anspruch 1 bestimmte Komprimierbarkeit zwischen 150 und 200 N und eine in einem Test B bestimmte Komprimierbarkeit von mindestens gleich 170 N, bevorzugt zwischen 175 und 300 N aufweist, wobei der Test B darin besteht, dass man mit einem Härteprüfer ERWEKA TBH 30 die Druckfestigkeit einer zylinderförmigen Tablette mit konvexen Seiten (Krümmungsradius 13 mm), mit einem Durchmesser von 13 mm, einer Dicke von 6 mm und einem Gewicht von 0,762 g, d.h. einer scheinbaren Volumenmasse von 1,35 g/ml, misst.

3. Pulverförmiges Dextrosehydrat nach einem der Ansprüche 1 und 2, **dadurch gekennzeichnet, dass** es folgende Daten aufweist:
- eine nach HOSOKAWA POWDER TESTER bestimmte scheinbare Dichte unter 0,7 g/ml, bevorzugt zwischen 0,45 und 0,65 g/ml und noch bevorzugter zwischen 0,5 und 0,6 g/ml,
- einen mittleren Durchmesser zwischen 50 und 1000 µm, bevorzugt zwischen 100 und 500 µm,
- eine Fließzahl von mindestens gleich 60, bevorzugt zwischen 60 und 90.

4. Verfahren zur Herstellung von pulverförmigem Dextrosehydrat nach einem der Ansprüche 1 bis 3, **dadurch gekennzeichnet, dass** es eine Abfolge von Schritten umfasst, die aus einem Schritt der Wiederbefeuchtung / Granulierung von im Wesentlichen α-kristallförmiger Dextrose mit Hilfe eines entsprechenden Bindemittels, welche direkt durch Kristallisation oder durch teilweise oder vollständige Trocknung eines kristallinen Dextrose-Monohydrats erhalten wird, und aus einem anschließenden Schritt der Reifung / Trocknung der auf diese Weise erhaltenen granulierten, wiederbefeuchteten Dextrose besteht, so dass der Wassergehalt des Endprodukts auf einen Wert über 1 %, insbesondere zwischen 2 % und 10 %, gehalten wird.

5. Verfahren zur Herstellung von pulverförmigem Dextrosehydrat nach einem der Ansprüche 1 und 3, **dadurch gekennzeichnet, dass** es einen Schritt der Granulierung von α-kristalliner Dextrose umfasst, die einen Wassergehalt über 1 %, bevorzugt zwischen 2 und 10 % aufweist.

6. Verfahren zur Herstellung von pulverförmigem Dextrosehydrat nach einem der Ansprüche 2 oder 3, **dadurch gekennzeichnet, dass** es einen Schritt der Granulierung von α-kristalliner Dextrose umfasst, die einen Wassergehalt von mindestens gleich 1 % aufweist.

7. Herstellungsverfahren nach einem der Ansprüche 4 bis 6, **dadurch gekennzeichnet, dass** der Schritt der Granulierung in einer kontinuierlichen Misch- und Granuliervorrichtung durchgeführt wird.

8. Pulverförmiges Dextrosehydrat nach Anspruch 2, **dadurch gekennzeichnet, dass** es folgende Daten ausweist:
- einen Gehalt an Dextrose von mindestens gleich 98 %,
- einen Anteil an α-kristalliner Form von mindestens gleich 95 %,
- eine gemäß dem Test A bestimmte Komprimierbarkeit zwischen 180 und 200 N und eine gemäß dem Test B bestimmte Komprimierbarkeit über 220 N, und bevorzugt über 230 N aufweist.

9. Verwendung eines pulverförmigen Dextrosehydrats nach einem der Ansprüche 1 bis 3 oder 8, oder nach einem der Ansprüche 4 bis 7 erhalten, als Süßungs-, Osmose-, Nahrungsmittel oder Träger in insbesondere für den Nahrungsmittel-, pharmazeutischen, chemischen oder agrarchemischen Bereich bestimmen Zusammensetzungen.

## Claims

1. Dextrose hydrate in powder form, **characterised in that** it has:
- a dextrose content at least equal to 98%,
- an α crystalline form content at least equal to 95%,
- a water content greater than 1%, preferably in the range 2% to 10% and even more preferably in the range 5% to 9.5%,
- a compressibility determined according to a test A consisting in measuring the force, expressed in Newton, which is representative of the compressibility of the dextrose in powder form, this force reflecting the resistance to crushing of a tablet which is cylindrical with convex sides (radius of curvature 13 mm), having a diameter of 13 mm, a thickness of 6 mm and a weight of 0.734 g, i.e. an apparent density of 1.3 g/ml, said compressibility being at least equal to 70 N, preferably at least equal to 90 N, and even more preferably in the range 90 N to 200 N.

2. Dextrose hydrate in powder form according to claim 1, **characterised in that** it has a compressibility determined according to the test A of claim 1 in the range 150 N to 200 N and according to a test B consisting in measuring, on an ERWEKA TBH 30 durometer, the resistance to crushing of a cylindrical tablet with convex sides (radius of curvature 13 mm), having a diameter of 13 mm, a thickness of 6 mm and a weight of 0.762 g, i.e. an apparent density of 1.35 g/ml, at least equal to 170 N, preferably in the range 175 N to 300 N.

3. Dextrose hydrate in powder form according to either of claims 1 and 2, **characterised in that** it has:
- an apparent density, determined according to HOSOKAWA POWDER TESTER, of less than 0.7 g/ml, preferably in the range 0.45 g/ml to 0.65 g/ml and even more preferably in the range 0.5 g/ml to 0.6 g/ml,
- a mean diameter in the range 50 µm to 1000 µm, preferably in the range 100 µm to 500 µm,
- a flow grade at least equal to 60, preferably in the range 60 to 90.

4. A process for the preparation of a dextrose hydrate in powder form according to any one of claims 1 to 3, **characterised in that** it comprises a succession of steps consisting in a step involving the rehumidification/granulation, using a suitable binder, of a crystalline dextrose of substantially α form obtained directly by crystallisation or by partial or complete drying of a crystalline dextrose monohydrate, then a step involving the ageing/drying of the rehumidified granulated dextrose thus obtained, while keeping the water content of the final product to a value of greater than 1%, in particular of between 2% and 10%.

5. A process for the preparation of a dextrose hydrate in powder form according to either of claims 1 and 3, **characterised in that** it comprises a step involving the granulation of an α crystalline dextrose having a water content greater than 1%, preferably in the range 2% to 10%.

6. A process for the preparation of a dextrose hydrate in powder form according to either of claims 2 or 3, **characterised in that** it comprises a step involving the granulation of an α crystalline dextrose having a water content at most equal to 1%.

7. A process for preparation according to any one of claims 4 to 6, **characterised in that** the granulation step is carried out in a continuous mixer-granulator.

8. Dextrose hydrate in powder form according to claim 2, **characterised in that** it has:
- a dextrose content at least equal to 98%,
- an α crystalline form content at least equal to 95%,
- a compressibility, determined according to the test A, in the range 180 N to 200 N, and according to the test B greater than 220 N, and preferably greater than 230 N.

9. The use of a dextrose hydrate in powder form according to any one of claims 1 to 3 or 8, or obtained according to any one of claims 4 to 7 as a sweetener, osmotic agent, nutrient or excipient in compositions intended in particular for the food, pharmaceutical, chemical or agrochemical sectors.
